# EUROPÄISCHE PATENTANMELDUNG

(11) **EP 4 134 763 A1**
(43) Veröffentlichungstag der Anmeldung: **15.02.2023**
(21) Anmeldenummer: 21191223.3
(22) Anmeldetag: 13.08.2021
(51) Int. Cl.: G05B 19/4099, B22F 10/25, B22F 10/80, B22F 10/368, B33Y 50/02

(54) **ADDITIVE FERTIGUNG MIT TEMPERATURSIMULATION**

(71) Anmelder: Siemens Aktiengesellschaft, 80333 München (DE)
(72) Erfinder: Hauser, Tobias, 89347 Bubesheim (DE); Kamps, Tobias, 80538 München (DE); Kastsian, Darya, 14612 Falkensee (DE); Reisch, Raven Thomas, 81379 München (DE); Reznik, Daniel, 13503 Berlin (DE)

(57) **Zusammenfassung**

Die Erfindung gibt ein automatisiertes Verfahren zur Fertigungsplanung und -vorbereitung für die additive Herstellung eines dreidimensionalen Gegenstands (6) aus Schweißbahnen mittels eines Direct Energy Deposition Verfahrens, mit den Schritten:
- Segmentierung (1 bis 5) des 3D-Models des Gegenstands (6) in einem CAD-Programm, und
- für die Segmente (1 bis 5) des Gegenstands (6) Ausführung einer bahnenweisen Temperatursimulation, wobei die Temperatursimulation einen zeit- und ortsabhängigen Temperaturverlauf für die Schweißbahn während des Aufbaus des Gegenstands (6) ermittelt.

Die Erfindung gibt auch ein Verfahren zur Herstellung eines Gegenstands, ein zugehöriges Rechensystem, ein zugehöriges Computerprogrammprodukt sowie ein computerlesbares Medium an.

## Beschreibung

### GEBIET DER ERFINDUNG

Die Erfindung betrifft ein automatisiertes Verfahren zur Fertigungsplanung und -vorbereitung für die additive Herstellung eines dreidimensionalen Gegenstands aus Schweißbahnen mittels eines Direct Energy Deposition Verfahrens. Die Erfindung betrifft auch ein Verfahren zur Herstellung eines Gegenstands, ein zugehöriges Rechensystem, ein zugehöriges Computerprogrammprodukt sowie ein computerlesbares Medium.

### HINTERGRUND DER ERFINDUNG

Bei einer additiven Fertigung (3D-Druck) ist eine Regelung des Prozesses ausschlaggebend, um einen stabilen Prozess zu erreichen, der für gleichbleibende Werkstoffeigenschaften erforderlich ist. Bei dem "Direct Energy Deposition (DED)" Verfahren, wie zum Beispiel bei "Laser Metal Deposition (LMD)" und "Wire Arc Additive Manufacturing (WAAM)", werden die einzelnen Lagen mittels vieler nebeneinander liegenden Spuren umgesetzt.

Um konstante Werkstoffeigenschaften zu erhalten, ist es wichtig, über den gesamten Prozess die Prozessgrößen konstant beizubehalten. Ein elementarer Einflussfaktor auf den Prozess ist die Temperatur des Bauteils, genauer gesagt, die Zwischenlagentemperatur der einzelnen Spuren bzw. Lagen. Eine Änderung der Zwischenlagentemperatur hat Auswirkungen auf den gesamten Prozess. So besteht beispielsweise ein direkter Zusammenhang zwischen der Zwischenlagentemperatur und der Spurhöhe sowie der Spurbreite der einzelnen Spur. Eine steigende Prozesstemperatur bewirkt beispielsweise ein Verfehlen der geplanten zu erreichenden Spurhöhe, da das Schmelzbad aufgrund der geringeren Viskosität flacher verläuft als geplant.

Die Auswirkungen sind vielseitig. Einerseits kann so der Prozess aus dem Fokus geraten, da der Abstand zwischen Bauteil und Werkzeug (Schweißbrenner, Laser, ...) zunimmt oder abnimmt. Andererseits nimmt die Prozessgenauigkeit ab, sodass nicht die erforderlichen Maße des Bauteils eingehalten werden können. Zuletzt kann die Prozessstabilität stark beeinträchtigt werden und Prozess z.B. auf Grund einer zu ungünstig Schutzgasströmung (→ mehr Poren, Oxidation), Absacken auf Grund von Überhitzung des Basismaterials, etc. sogar instabil werden. All dies kann im ungünstigsten Fall zum Ausschuss des Bauteils, das gefertigt wird, oder gar zur Beschädigung der Maschine führen und dadurch zusätzliche Kosten verursachen.

Bekannt sind Regelungen, die auf den Daten von Sensoren, wie Pyrometern oder Wärmebildkameras, basieren. Da die Sensoren aber sehr teuer sind und zudem insbesondere bei reflektierenden, metallischen Legierungen oft nicht die erforderlichen Genauigkeiten oder die korrekten Werte wiedergeben, ist eine derartige Lösung nicht immer umsetzbar. Vor allem für den Werkstoff Aluminium sowie den dazugehörigen Legierungen, wie beispielsweise AlSi5 oder AlSi10Mg, ist die kontaktlose Temperaturmessung schwierig, da diese Werkstoffe stark reflektieren.

Eine Messung mit Hilfe kontaktierender Sensoren, wie beispielsweise mit einem Pt100-Element, findet lediglich an einem dedizierten Punkt am Bauteil statt und ist somit ebenfalls nicht zielführend für den Aufbau großvolumiger Bauteile, wie sie bei DED Verfahren häufig üblich sind.

### ZUSAMMENFASSUNG DER ERFINDUNG

Es ist Aufgabe der Erfindung, eine Lösung für DED Verfahren anzugeben, durch die der Einfluss der Temperatur auf das zu fertigende Bauteil beherrschbar wird.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, die Ergebnisse einer schichtbasierten Temperatursimulation für die Anpassung der Aufbaustrategie im CAM-Programm der Fertigungsanlage unmittelbar zu nutzen. Dadurch werden Temperaturextreme und daraus folgende Prozessinstabilitäten reduziert, die Formtreue verbessert und so die Menge an Ausschuss vermindert. Des Weiteren wird der Bedarf für eine kontaktlose Temperaturmessung, die gegebenenfalls ungenau ist, reduziert, da berechnete und simulativ verifizierte Prozessparameter bereits eine Steuerung der Prozesseigenschaften erlauben. Es ist keine Sensorik notwendig, um ausreichend gute Ergebnisse zu erzielen. Weniger komplexe Systemaufbauten sind möglich.

In einem weiteren Aspekt der Erfindung ist eine Verwendung eines kontaktbasierten Temperatursensors vorgesehen, wobei dennoch optimale Ergebnisse im Prozess durch Verwendung und Optimierung eines modellbasierten Prozessreglers, der auf die Temperaturwerte der Simulation zurückgreift, erzielt werden können. Dadurch ist eine Nutzung von kostengünstigen Sensoren mit gleichzeitig verlässlichen Werten möglich. Außerdem gibt es dadurch einen optimalen Energieeintrag an jedem Ort im Bauteil, der auch auf Störgrößen in der Umgebung mithilfe des Reglers angepasst werden kann. Schließlich gibt es dadurch optimale Bauteilmaterialeigenschaften, optimale Formtreue, optimale Prozessparameter, geringerer Ausschuss und eine bessere Kontrolle des Prozesses.

Die Erfindung beansprucht ein automatisiertes Verfahren zur Fertigungsplanung und -vorbereitung für die additive Herstellung eines dreidimensionalen Gegenstands aus Schweißbahnen mittels eines Direct Energy Deposition Verfahrens, und weist folgende Schritte auf:
- Segmentierung des 3D-Models des Gegenstands in einem CAD-Programm,
- für die Segmente des Gegenstands Ausführung einer bahnweisen Temperatursimulation, wobei die Temperatursimulation einen zeit- und ortsabhängigen Temperaturverlauf für die Schweißbahn während des Aufbaus des Gegenstands ermittelt.

Statt "Schweißbahn" sind auch die Begriffe "Raupe", "Wulst", "Schicht" und "Lage" geläufig.

In einer Weiterbildung des Verfahrens werden auf Basis der so ermittelten Temperaturverläufe Fertigungsparameter des Direct Energy Deposition Verfahrens derart angepasst, dass ein vorgegebener Temperaturmaximalwert in dem gesamten Gegenstand während des Aufbaus des Gegenstands nicht überschritten wird.

In einer Weiterbildung des Verfahrens werden auf Basis der so ermittelten Temperaturverläufe Fertigungsparameter des Direct Energy Deposition Verfahrens derart angepasst, dass ein vorgegebener Temperaturminimalwert in der vorherigen Schicht während des Aufbaus des Gegenstands nicht unterschritten wird.

In einer weiteren Ausführungsform sind die Fertigungsparameter Abkühlzeiten, Pfadverläufe für die Schweißbahnen, eine Vorschubgeschwindigkeit und/oder eine Schweißtemperatur.

In einer weiteren Ausgestaltung des Verfahrens erfolgt eine weitere Temperatursimulation mit den angepassten Fertigungsparametern und Werkzeugwegen des DED Verfahrens an einem digitalen Zwilling des Gegenstands.

In einer weiteren Ausgestaltung werden die ermittelten Temperaturverläufe in einen Maschinecode, vorzugsweise der DIN G-Code, übertragen, sodass für jeden Zeitpunkt des Direct Energy Deposition Verfahrens Zielgrößen für die Temperatur sowie die dafür erforderlichen Fertigungsparameter bekannt sind.

Die Erfindung beansprucht auch ein automatisiertes Verfahren zur Herstellung eines dreidimensionalen Gegenstands mittels eines Direct Energy Deposition Verfahrens, mit den Schritten:
- Fertigungsplanung und -vorbereitung nach dem erfindungsgemäßen Verfahren,
- Aufbringen der Schweißbahnen, und
- während des Aufbringens eine Ermittlung einer aktuellen Temperatur mittels kontaktbasierter Temperaturmessung an vorgegebenen Orten der Schweißbahnen und Vergleich mit den in der Fertigungsplanung und -vorbereitung ermittelten, zugehörigen Temperaturverläufen.

In einer Weiterbildung des Fertigungsverfahrens wird bei Unterschreiten oder Überscheiten eines vorgegebenen Differenzgrenzwerts zwischen der aktuellen Temperatur und dem Temperaturverlauf eine vordefinierte Maßnahme getroffen.

Falls eine Abweichung auftritt, wird nicht lediglich den Energieeintrag erhöhen oder erniedrigen, sondern dadurch auf wird auf einen instabilen Prozess im Allgemeinen geschlossen. Dieser instabile Prozess kann durch Oxidation, durch extreme Poren, durch unzureichendes Schutzgas, durch zu hohe Abkühlbedingungen oder ähnliches verursacht werden. Vorstehendes ist somit als Qualitätskontrolle gedacht, einen Gegenstand, bei dem extreme Unterschiede festgestellt wurden, zum Beispiel nochmal näher zu untersuchen.

Die Erfindung beansprucht des Weiteren ein Rechensystem zur Fertigungsplanung und -vorbereitung für die additive Herstellung eines dreidimensionalen Gegenstands aus Schweißbahnen mittels eines Direct Energy Deposition Verfahrens, wobei das Rechensystem eingerichtet ist:
- das 3D-Models des Gegenstands in einem CAD-Programm zu segmentieren, und
- für die Segmente des Gegenstands eine bahnenweisen Temperatursimulation auszuführen, wobei die Temperatursimulation einen zeit- und ortsabhängigen Temperaturverlauf für die Schweißbahn während des Aufbaus des Gegenstands ermittelt.

In einer Weiterbildung ist das Rechensystem ausgebildet, auf Basis der so ermittelten Temperaturverläufe Fertigungsparametern des Direct Energy Deposition Verfahrens derart anzupassen, dass ein vorgegebener Temperaturmaximalwert in dem gesamten Gegenstand während des Aufbaus des Gegenstands nicht überschritten wird.

In einer weiteren Ausführungsform ist das Rechensystem ausgebildet, auf Basis der so ermittelten Temperaturverläufe Fertigungsparameter des Direct Energy Deposition Verfahrens derart anzupassen, dass ein vorgegebener Temperaturminimalwert in der vorherigen Schicht während des Aufbaus des Gegenstands nicht unterschritten wird.

Die Fertigungsparameter können Abkühlzeiten, Pfadverläufe für die Schweißbahnen, eine Vorschubgeschwindigkeit und/oder eine Schweißtemperatur/Energieeintrag sein.

Die Erfindung beansprucht außerdem ein Computerprogrammprodukt, umfassend ein Computerprogramm, wobei das Computerprogramm in eine Speichereinrichtung einer Einrichtung ladbar ist, wobei mit dem Computerprogramm die Schritte eines erfindungsgemäßen Fertigungsplanungs- und Fertigungsvorbereitungsverfahrens ausgeführt werden, wenn das Computerprogramm auf der Einrichtung ausgeführt wird.

Schließlich beansprucht die Erfindung ein computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines erfindungsgemäßen Fertigungsplanungs- und Fertigungsvorbereitungsverfahrens ausgeführt werden, wenn das Computerprogramm auf der Einrichtung ausgeführt wird.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Ablaufschema der Fertigungsvorbereitung und - planung für ein Direct Energy Deposition (DED) Verfahren, und
- FIG. 2: ein Blockschaltbild einer DED Fertigungsanlage.

### DETAILLIERTE BESCHREIBUNG DER ERFINDUNG

Die Erfindung wird anhand eines Ausführungsbeispiels beschrieben.

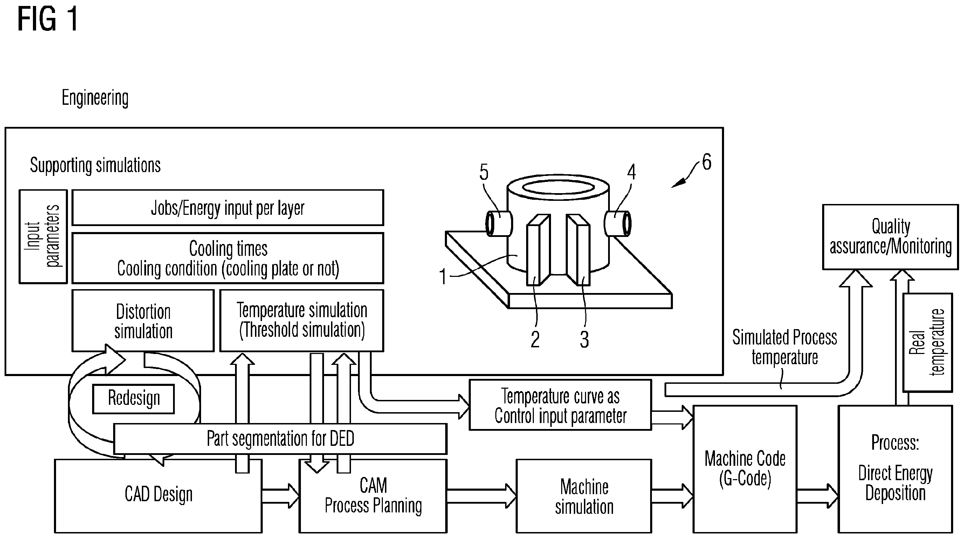

Entsprechend FIG. 1 werden folgende Schritte in der Fertigungsplanung und Fertigungsvorbereitung ausgeführt. Zunächst wird das 3D-Model im CAD-Programm, z.B. Siemens NX, Catia, Autodesk, etc., segmentiert ("part segemnetation for DED") und für die einzelnen Segmente 1 bis 5 eines aufzubauenden Gegenstands 6 (auch als Bauteil bezeichenbar) schichtweise eine Temperatursimulation durchgeführt ("temperature simulation"), die den zeitlich und örtlich aufgelösten Temperaturverlauf während des Aufbaus des Gegenstands 6 für den gewählten DED-Fertigungsprozess, wie zum Beispiel WAAM, LMD, etc., ermittelt. Die schichtweise Simulation ermöglicht dabei eine schnelle Durchführung mit geringen Latenzzeiten für den Nutzer des DED-Fertigungsprozesses.

Für die Temperatursimulation werden u.a. als Eingangsparameter ("input parameters") der Wärmeeintrag je Schweißbahn (auch als Spur oder Lage bezeichenbar, "energy input per layer"), zum Beispiel durch die Lichtbogenenergie beim Schweißen, die Abkühlzeiten ("cooling times") und die Kühlbedingungen ("cooling condition"), wie Vorhandensein einer Kühlplatte oder eines Kühlgebläses, verwendet.

Die erhaltenen Temperaturen werden gemeinsam mit der CAD-Datei an das CAM-Programm (z.B. Siemens NX, Autodesk, ...) übergeben ("CAM process planning"), sodass für jedes Voxel des Gegenstands 6 die Temperatur verfügbar ist. Auf Basis der so ermittelten Temperaturverläufe wird die Aufbaustrategie (d.h. die Fertigungsparameter - Einbau von Kühlzeiten, Pfadplanung für die Schweißbahnen, etc.) angepasst, um unerwünschte Temperaturmaxima und -minima in dem Gegenstand 6 während des Aufbaus des Gegenstands 6 zu vermeiden. Damit wird bereits in der Fertigungsplanung eine Reduzierung des Temperaturgradienten erreicht und so eine simulationsgetriebene Temperatursteuerung für den Aufbau realisiert.

Nachdem die Aufbaustrategie in Bezug auf die Temperatur optimiert wurde, kann ergänzend eine weitere Temperatursimulation mit vollständig bekannten Prozessparametern und Werkzeugwegen mit einem digitalen Zwilling des Bauteils 6 durchgeführt werden ("machine simulation). Dies dient der Validierung der Aufbaustrategie.

Die erhaltenen simulierten Temperaturverläufe werden z.B. über den Post-Prozessor in den Maschinencode, z.B. G-Code, übertragen ("machine code"). Der Maschinencode beinhaltet nun für die Steuerung, z.B. der Siemens Sinumerik 840d sl, zu jedem Zeitpunkt während des Prozesses die erforderlichen Informationen. So sind für jeden Zeitpunkt im Prozess Zielgrößen für die Temperatur sowie die dafür erforderlichen Prozessparameter bekannt, sodass ohne weitere Sensorik bereits ein Aufbau des Gegenstands 6 ("process Direct energy Deposition") mit weniger Prozessinstabilitäten erreicht wird.

Dadurch wird der gesamte Prozess ohne zusätzliche Sensoren stabil gehalten und der Ausschuss reduziert sich. Diese Art der Temperaturregelung ist unabhängig von Sensorwerten und funktioniert daher für alle Werkstoffe, wie z.B. auch Aluminium, bei welchem eine kontaktlose Temperaturmessung sehr schwierig ist.

Durch den bekannten Temperaturverlauf wird auch der Einsatz von kontaktbasierten Temperatursensoren möglich, um die Ergebnisse zu überwachen und nochmals zu optimieren. An jedem Ort des Bauteils ist der optimale Temperaturverlauf über die Zeit bekannt, so auch an dem Ort, an dem der kontaktbasierte Sensor montiert wird ("quality assurance/monitoring"). Sofern die Temperatur zu einem bestimmten Zeitpunkt am Ort des Sensors einen Grenzwert, der über die Simulation zuvor u.U. material- und bauteilspezifisch festgelegt wurde, über- oder unterschreitet, kann z.B. eine vorausschauende, modellbasierte Prozessregelung eingreifen und den Energieeintrag im Prozess erhöhen bzw. erniedrigen, um wieder im akzeptablen Prozessfenster hinsichtlich der Temperatur zu bleiben.

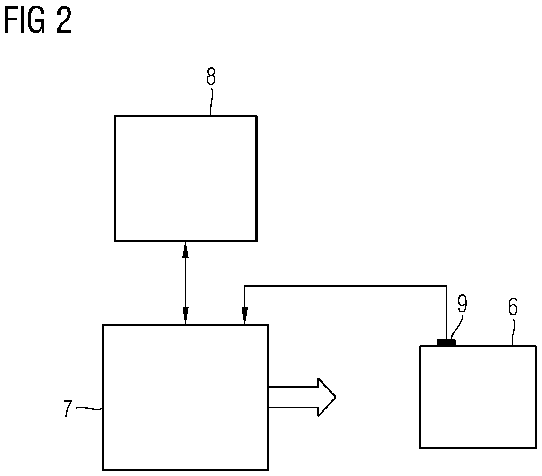

Fig. 2 zeigt ein Blockschaltbild einer DED Fertigungsanlage 7 zum Aufbau des dreidimensionalen Gegenstands 6. In dem Rechensystem 8 erfolgt das automatisierte Verfahren zur Fertigungsplanung und -vorbereitung gemäß den Ausführungen oben zu FIG. 1. Mit Hilfe des kontaktierenden Temperatursensors 9 kann die Einhaltung der simulierten Temperaturverläufe überprüft werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1-5: Segmente des Gegenstands 6
- 6: Gegenstand
- 7: DED Fertigungsanlage
- 8: Rechensystem
- 9: Temperatursensor

## Patentansprüche

1. Automatisiertes Verfahren zur Fertigungsplanung und - vorbereitung für die additive Herstellung eines dreidimensionalen Gegenstands (6) aus Schweißbahnen mittels eines Direct Energy Deposition Verfahrens, mit den Schritten:
- Segmentierung (1 bis 5) des 3D-Models des Gegenstands (6) in einem CAD-Programm, und
- für die Segmente (1 bis 5) des Gegenstands (6) Ausführung einer bahnenweisen Temperatursimulation, wobei die Temperatursimulation einen zeit- und ortsabhängigen Temperaturverlauf für die Schweißbahn während des Aufbaus des Gegenstands (6) ermittelt.

2. Verfahren nach Anspruch 1, **gekennzeichnet durch**:
- auf Basis der so ermittelten Temperaturverläufe Anpassung von Fertigungsparametern des Direct Energy Deposition Verfahrens derart, dass ein vorgegebener Temperaturmaximalwert in dem gesamten Gegenstand (6) während des Aufbaus des Gegenstands (6) nicht überschritten wird.

3. Verfahren nach Anspruch 2, **gekennzeichnet durch**:
- auf Basis der so ermittelten Temperaturverläufe Anpassung von Fertigungsparametern des Direct Energy Deposition Verfahrens derart, dass ein vorgegebener Temperaturminimalwert in der vorherigen Schicht während des Aufbaus des Gegenstands (6) nicht unterschritten wird.

4. Verfahren nach Anspruch 2 oder 3, **dadurch gekennzeichnet, dass** die Fertigungsparameter Abkühlzeiten, Pfadverläufe für die Schweißbahnen, eine Vorschubgeschwindigkeit, ein Energieeintrag und/oder eine Schweißtemperatur sind.

5. Verfahren nach einem der Ansprüche 2 bis 4, **gekennzeichnet durch**:
- eine weitere Temperatursimulation mit den angepassten Fertigungsparametern und Werkzeugwegen des Direct Energy Deposition Verfahrens an einem digitalen Zwilling des Gegenstands (6).

6. Verfahren nach einem der Ansprüche 2 bis 5, **gekennzeichnet durch**:
- Übertragung der ermittelten Temperaturverläufe in einen Maschinecode, sodass für jeden Zeitpunkt des Direct Energy Deposition Verfahrens Zielgrößen für die Temperatur sowie die dafür erforderlichen Fertigungsparameter bekannt sind.

7. Verfahren nach Anspruch 6, **dadurch gekennzeichnet,**
**dass** der Maschinencode der DIN G-Code ist.

8. Automatisiertes Verfahren zur Herstellung eines dreidimensionalen Gegenstands mittels eines Direct Energy Deposition Verfahrens, **gekennzeichnet durch**:
- Fertigungsplanung und -vorbereitung nach einem Verfahren der Ansprüche 1 bis 7,
- Aufbringen der Schweißbahnen, und
- während des Aufbringens eine Ermittlung einer aktuellen Temperatur mittels kontaktbasierter Temperaturmessung an vorgegebenen Orten der Schweißbahnen und Vergleich mit den in der Fertigungsplanung und -vorbereitung ermittelten, zugehörigen Temperaturverläufen.

9. Verfahren nach Anspruch 8, **dadurch gekennzeichnet,**
**dass** bei Unterschreiten oder Überscheiten eines vorgegebenen Differenzgrenzwerts zwischen der aktuellen Temperatur und dem Temperaturverlauf ein Energieeintrag beim Aufbringen der Schweißbahn erniedrigt bzw. erhöht wird.

10. Rechensystem (8) zur Fertigungsplanung und -vorbereitung für die additive Herstellung eines dreidimensionalen Gegenstands (6) aus Schweißbahnen mittels eines Direct Energy Deposition Verfahrens, wobei das Rechensystem (8) eingerichtet ist:
- das 3D-Models des Gegenstands (6) in einem CAD-Programm zu segmentieren (1 bis 5), und
- für die Segmente (1 bis 5) des Gegenstands (6) eine bahnenweisen Temperatursimulation auszuführen, wobei die Temperatursimulation einen zeit- und ortsabhängigen Temperaturverlauf für die Schweißbahn während des Aufbaus des Gegenstands ermittelt.

11. Rechensystem (8) nach Anspruch 10, das eingerichtet ist, auf Basis der so ermittelten Temperaturverläufe Fertigungsparameter des Direct Energy Deposition Verfahrens derart anzupassen, dass ein vorgegebener Temperaturmaximalwert in dem gesamten Gegenstand (6) während des Aufbaus des Gegenstands (6) nicht überschritten wird.

12. Rechensystem (8) nach Anspruch 10, das eingerichtet ist, auf Basis der so ermittelten Temperaturverläufe Fertigungsparameter des Direct Energy Deposition Verfahrens derart anzupassen, dass ein vorgegebener Temperaturminimalwert in der vorherigen Schicht während des Aufbaus des Gegenstands nicht unterschritten wird.

13. Rechensystem (8) nach Anspruch 11 oder 12, **dadurch gekennzeichnet,**
**dass** die Fertigungsparameter Abkühlzeiten, Pfadverläufe für die Schweißbahnen, eine Vorschubgeschwindigkeit, ein Energieeintrag und/oder eine Schweißtemperatur sind.

14. Computerprogrammprodukt, umfassend ein Computerprogramm, wobei das Computerprogramm in eine Speichereinrichtung einer Einrichtung ladbar ist, wobei mit dem Computerprogramm die Schritte eines Verfahrens nach einem der Ansprüche 1 bis 9 ausgeführt werden, wenn das Computerprogramm auf der Einrichtung ausgeführt wird.

15. Computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines Verfahrens nach einem der Ansprüche 1 bis 9 ausgeführt werden, wenn das Computerprogramm auf der Einrichtung ausgeführt wird.
